# FASCICULE DE BREVET EUROPEEN

(11) **EP 0 450 200 B1**
(45) Date de publication et mention de la délivrance du brevet: **26.01.1994**
(21) Numéro de dépôt: 90200810.1
(22) Date de dépôt: 04.04.1990
(51) Int. Cl.: A47J 31/40

(54) **Groupe automatique pour café express et procédé de fonctionnement de celui-ci**
Automaten-Gruppe für Espresso-Kaffee und Verfahren zu deren Betrieb
Automatic assembly for espresso coffee and method of operating the same

(43) Date de publication de la demande: 09.10.1991
(73) Titulaire: C.M.A. S.p.A., I-31058 Susegana (TV) (IT)
(72) Inventeur: Franzolin, Jean-Paul, CH-1022 Chavannes (CH)
(74) Mandataire: Reverdin, André Pierre

(56) Documents cités:
- EP-A- 0 321 773
- FR-A- 1 305 179
- FR-A- 2 267 073

## Description

La présente invention concerne un groupe automatique pour café express comprenant une chambre de pression pour la préparation du café selon le préambule de la revendication 1.

Des machines à café sont connues, dans lesquelles un ensemble cylindre-piston comprime du café moulu dans une chambre de pression en forme de cylindre, pression exercée par la tête du piston, lui-même actionné par un moteur, une came ou un autre procédé. De telles machines sont décrites par exemple dans la demande de brevet européen EP - A - 0 073 739.

Ces machines présentent l'inconvénient que la chambre de pression ainsi définie n'offre qu'un volume fixe au moment de l'injection d'eau chaude ou de vapeur d'eau. Dans ce volume fixe l'eau ou la vapeur circulent imparfaitement à travers la masse de café moulu et ne peuvent pas en tirer tout l'arôme.

La publication FR-A-2 267 073 décrit un dispositif du type défini dans le préambule de la revendication 1, permettant une augmentation de volume de la chambre de pression, par coulissement du piston dans le cylindre.

Par ailleurs, la publication EP-A-0 321 773 enseigne l'utilisation d'un système à vis sans fin et écrou pour déplacer le piston dans le cylindre.

Les réalisations décrites par ces documents présentent l'inconvénient, d'une part du caractère rudimentaire des moyens de guidage du piston par rapport au cylindre, et d'autre part d'un encombrement important des divers organes mécaniques nécessaires au fonctionnement des appareils considérés.

L'invention se propose, pour un groupe automatique décrit dans le préambule de la revendication 1, d'atteindre des avantages inattendus par les moyens décrits dans la partie caractérisante de cette même revendication.

De manière connue, la chambre de pression comprend un ensemble cylindre-piston, l'expansion de la chambre étant réalisée par le recul de la face supérieure du piston, correspondant à la tête de ce piston.

Dans l'invention, ce piston comprend une base élargie coulissant sur au moins une colonne de guidage parallèle à l'axe du cylindre. La base élargie est accouplée par des moyens de liaison élastique à une pièce de poussée coulissant sur la ou les mêmes colonnes de guidage que la base élargie, des moyens de butée limitent l'écartement entre la pièce de poussée et la base élargie et la position de la pièce de poussée est déterminée par un système vis mobile en rotation - écrou fixe en rotation, l'écrou étant solidaire de la pièce de poussée et la vis étant parallèle à l'axe du cylindre.

Dans une forme particulière de réalisation de l'invention, les moyens de liaison élastique sont constitués par un ou plusieurs ressorts.

Dans une forme particulière de réalisation de l'invention, la base élargie et la pièce de poussée sont des plateaux rectangulaires et de même dimensions, et présentent au moins un trou borgne adapté à recevoir le ou les ressorts.

Dans une forme particulière de réalisation de l'invention, l'élément de fermeture-ouverture comprend un talon pivotant autour d'un axe parallèle à l'axe du cylindre.

Dans une forme particulière de réalisation de l'invention, le conduit de sortie du café liquide est aménagé dans le talon constituant l'élément de fermeture-ouverture.

Dans une forme particulière de réalisation de l'invention, le conduit d'adduction d'eau chaude ou de vapeur d'eau débouche dans la chambre de pression par la face supérieure du piston.

Dans une forme particulière de réalisation de l'invention, dans le piston et sa base élargie est aménagé un trou borgne destiné à laisser le passage à la vis lorsque le piston est en position de recul maximum.

Dans une forme particulière de réalisation de l'invention, les moyens d'entraînement de l'élément de fermeture-ouverture et de la vis comprennent des moteurs groupés côte à côte.

Dans cette dernière forme de réalisation de l'invention, l'encombrement global de la machine se trouve réduit conjointement par les trois caractéristiques, plus précisément:
- la situation de l'adduction d'eau chaude ou de vapeur d'eau dans la tête du piston venant en pression sur le café moulu permet de limiter la hauteur du groupe;
- le trou borgne pratiqué dans le piston et sa base élargie pour y insérer partiellement la vis du système vis-écrou permet de gagner en hauteur une partie de la place prise par le système vis-écrou;
- en groupant côte à côte en bas du groupe les moyens d'entraînement de la vis d'une part, de l'élément de fermeture-ouverture représenté par un talon pivotant d'autre part, on obtient une meilleure accessibilité aux autres parties du groupe.

Le procédé de fonctionnement pour un tel groupe automatique est le suivant: de la poudre de café est admise dans la chambre de pression, après quoi la chambre est fermée, la poudre de café est comprimée par la face supérieure du piston avant injection d'eau chaude ou de vapeur d'eau et écoulement de café liquide. Les moyens de contrôle déterminent la position de la pièce de poussée, la position de la face supérieure du piston étant déterminée à la fois par la position de la pièce de poussée et par la pression prévalant dans la chambre de pression, permettant une expansion du volume de la chambre de pression au moment de l'injection d'eau chaude ou de vapeur d'eau.

Une réalisation préférée du groupe et son fonctionnement sont décrits plus loin par référence aux dessins annexés dans lesquels:
- la figure 1 représente le groupe prêt à fonctionner,
- la figure 2 représente l'étape de la compression du café, avant l'injection d'eau chaude;
- la figure 3 représente l'étape d'éjection de la galette de café utilisé;
- la figure 4 montre dans une vue de côté du groupe, la position des conduits d'adduction d'eau chaude ou de vapeur d'eau et de sortie du café.

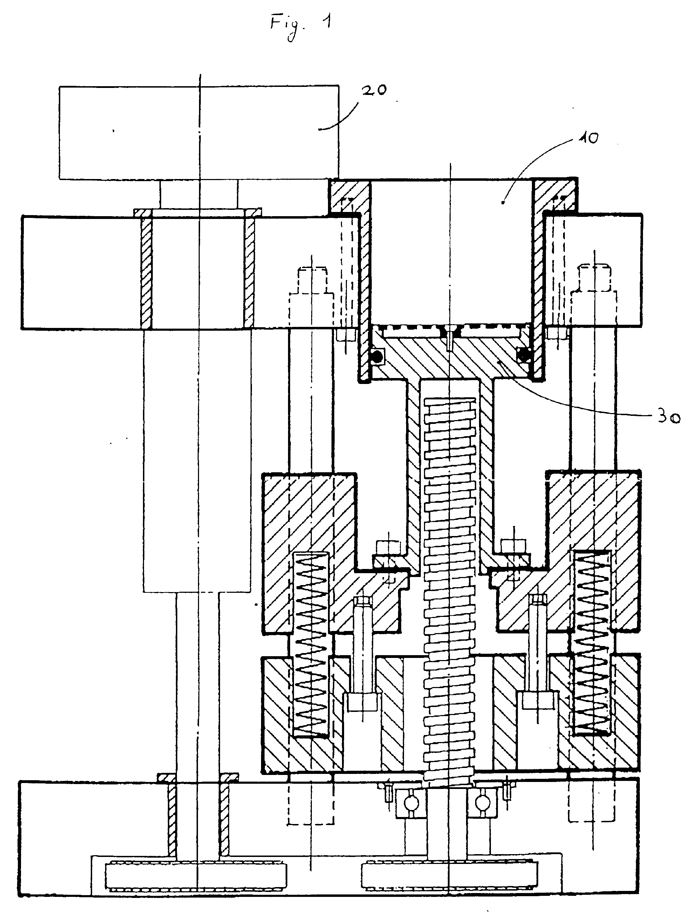

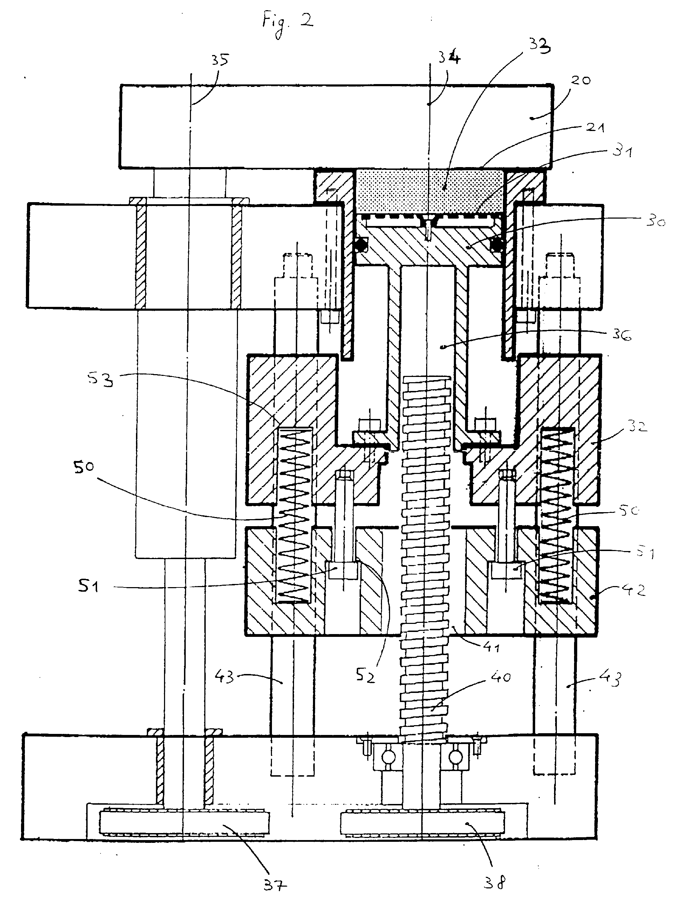

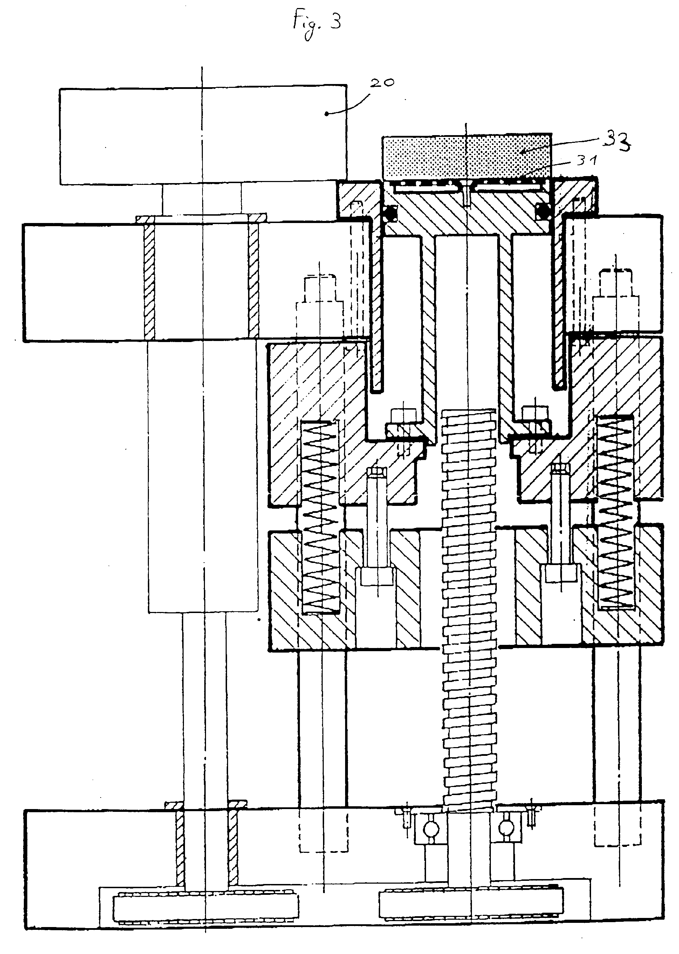

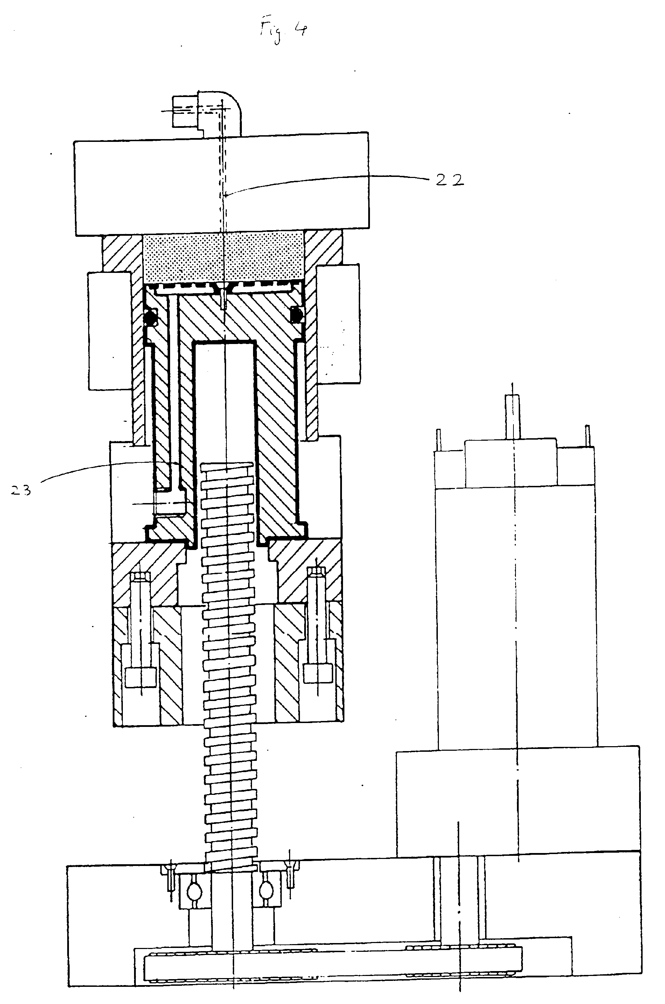

Dans la figure 1, le groupe est prêt à fonctionner.
Le talon pivotant 20 est en position ouverte, libérant l'entrée de la chambre de pression 10 pour permettre l'arrivée du café moulu; le piston 30 est en position de recul maximum, maximisant le volume de la chambre de pression 10.
Lorsque l'utilisateur commande une ou deux tasses de café depuis un panneau de commande (non représenté), les moyens de contrôle (non représentés) libèrent une quantité adéquate de café moulu, versé dans la chambre de pression 10 par une buse (non représentée) débouchant au-dessus de la chambre de pression 10. Le talon 20 pivote en position fermée, obturant la chambre de pression 10, comme montré en figure 2.
Des moyens de contrôle, connus en soi, déterminent la course totale d'une pièce de poussée représentée par un plateau 42 coulissant sur des colonnes fixes 43. Le déplacement de ce plateau 42 dépend, par l'intermédiaire d'un système vis-écrou, de l'angle de rotation d'une vis 40, actionnée par des moyens d'entraînement 38 couplés à un moteur électrique (non représenté). Cet angle est réglé en fonction de divers paramètres, en particulier le nombre de tasses choisi, la mouture et la nature du café, et la vitesse d'écoulement désirée; l'écrou 41, solidaire du plateau 42, transforme cet angle de rotation en un déplacement parallèle à l'axe 34 du cylindre et aux colonnes 43. Un trou borgne 36 aménagé dans le piston 30 est prévu pour y insérer partiellement la vis 40. La position de la base élargie du piston 30, représentée par un plateau 32, est déterminée par celle du plateau 42 et par la compression des ressorts 50 aménagés dans des trous borgnes 53 pratiqués dans les plateaux 32 et 42. L'écartement relatif des plateaux 42 et 32 est limité par les moyens de butée constitués par des épaulements 52 de vis de butée 51. La position de la paroi mobile 31 de la chambre de pression, représentée par la face supérieure du piston 30 solidaire du plateau 32, est déterminée de façon à exercer une pression déterminée sur le café, qui se trouve ainsi tassé en une galette 33. Pendant l'injection d'eau chaude ou de vapeur d'eau sous pression par le conduit 23, et l'écoulement du café par le conduit de sortie 22, visibles sur la figure 4, la paroi 31 est susceptible de reculer avec le plateau 32, comprimant un peu plus les ressorts 50 et réalisant ainsi l'expansion souhaitée de la chambre de pression contenant la galette de café 33.
Après remplissage des tasses et arrêt de l'injection d'eau chaude ou de vapeur d'eau, les moyens de contrôle font reculer légèrement le plateau 42 et indirectement la paroi 31 de la chambre de pression pour diminuer la pression exercée sur la face de travail 21 du talon 20 par l'intermédiaire de la galette de café 33; le talon 20 pivote en position ouverte, et, selon la figure 3, la paroi 31 de la chambre de pression avance jusqu'à la position occupée précédemment par la face de travail 21 du talon, expulsant la galette 33 de café moulu usagé, le talon 20 pivote en position fermée en raclant la paroi 31 de la chambre de pression, écartant ainsi la galette 33 de café moulu usagé, puis revient en position ouverte, la paroi 31 de la chambre de pression recule au maximum, la machine étant alors de nouveau prête à fonctionner comme en figure 1.

En groupant côte à côte en bas du groupe les moyens d'entraînement 37, 38, actionnés par des moteurs électriques (non représentés) de la vis 40 d'une part, et du talon pivotant 20 d'autre part, on obtient une meilleure accessibilité aux autres parties du groupe.

Il est entendu que l'invention n'est pas limitée par l'exemple d'exécution décrit, mais uniquement par la portée des revendications.

## Revendications

1. Groupe automatique pour café express comprenant:
- une chambre de pression (10) pour la préparation du café, cette chambre de pression étant constituée par un ensemble cylindre-piston et limitée d'une part par un élément de fermeture-ouverture (20) servant à l'introduction et l'élimination de la poudre de café, et d'autre part par la position de la face supérieure (31) du piston (30), la pression prévalant dans cette chambre (10) étant limitée par l'interposition de moyens de liaison élastique (50) agissant parallèlement à l'axe (34) du cylindre,
- un conduit (23) d'adduction d'eau chaude ou de vapeur d'eau et un conduit (22) de sortie de café, et
- des moyens de contrôle déterminant une position de la face supérieure (31) du piston et une quantité d'eau et de café,
caractérisé en ce que
- la course du piston (30) définissant le volume de la chambre (10) est déterminée par un système vis (40) mobile en rotation - écrou (41) fixe en rotation,
- le piston (30) comprend une base élargie (32) coulissant sur au moins une colonne de guidage (43) parallèle à l'axe (34) du cylindre,
- en ce que la base élargie (32) est accouplée par les moyens de liaison élastique (50) à une pièce de poussée (42) coulissant sur la ou les mêmes colonnes de guidage (43) que la base élargie (32),
- en ce que des moyens de butée (51, 52) limitent l'écartement entre la pièce de poussée (42) et la base élargie (32),
- et en ce que la position de ladite pièce de poussée (42) est déterminée par le système vis (40) mobile en rotation - écrou (41) fixe en rotation, l'écrou (41) étant solidaire de la pièce de poussée (42) et la vis (40) étant parallèle à l'axe (34) du cylindre.

2. Groupe automatique selon revendication 1, caractérisé en ce que les moyens de liaison élastique (50) sont des ressorts.

3. Groupe automatique selon revendication 2, caractérisé en ce que la base élargie (32) et la pièce de poussée (42) sont des plateaux rectangulaires de mêmes dimensions, et présentent au moins trois trous borgnes (53) adaptés à recevoir les ressorts.

4. Groupe automatique selon revendications 1 à 3, caractérisé en ce que l'élément de fermeture-ouverture (20) comprend un talon pivotant autour d'un axe (35) parallèle à l'axe (34) du cylindre.

5. Groupe automatique selon revendications 1 à 4, caractérisé en ce que le conduit (22) de sortie du café est aménagé dans l'élément de fermeture-ouverture (20).

6. Groupe automatique selon revendications 1 à 5, caractérisé en ce que le conduit (23) d'adduction d'eau chaude débouche dans la face supérieure (31) de la chambre de pression.

7. Groupe automatique selon revendications 1 à 6, caractérisé en ce que dans le piston (30) et sa base élargie (32) est aménagé un trou borgne (36) destiné à laisser le passage à la vis (40) lorsque le piston (30) est en position de recul maximum.

8. Groupe automatique selon revendications 4 à 7, caractérisé en ce que les moyens d'entraînement de l'élément de fermeture-ouverture (20) et de la vis (40) comprennent des moteurs groupés côte à côte.

## Claims

1. Automatic unit for espresso coffee, comprising:
- a pressure chamber (10) for preparing the coffee, this pressure chamber consisting of a cylinder/piston assembly and limited, on the one hand, by an opening/closing element (20) serving for the introduction and removal of the coffee powder, and, on the other hand, by the position of the upper face (31) of the piston (30), the pressure prevailing in this chamber (10) being limited by the interposition of elastic linking means (50) acting in parallel to the axis (34) of the cylinder,
- a conduit (23) for conveying hot water or steam and a conduit (22) for discharging coffee, and
- control means determining a position of the upper face (31) of the piston and a quantity of water and of coffee,
characterised in that
- the stroke of the piston (30) defining the volume of the chamber (10) is determined by a rotationally movable screw (40)/rotationally fixed nut (41) system,
- the piston (30) comprises a widened base (32) sliding over at least one guide column (43) parallel to the axis (34) of the cylinder,
- in that the widened base (32) is coupled by the elastic linking means (50) to a thrust piece (42) sliding over the same guide column or columns (43) as the widened base (32),
- in that stop means (51, 52) limit the spacing between the thrust piece (42) and the widened base (32),
- and in that the position of the said thrust piece (42) is determined by the rotationally movable screw (40)/rotationally fixed nut (41) system, the nut (41) being integral with the thrust piece (42) and the screw (40) being parallel to the axis (34) of the cylinder.

2. Automatic unit according to Claim 1, characterised in that the elastic linking means (50) are springs.

3. Automatic unit according to Claim 2, characterised in that the widened base (32) and the thrust piece (42) are rectangular plates of identical dimensions and have at least three blind holes (53) adapted to receive the springs.

4. Automatic unit according to Claims 1 to 3, characterised in that the closure/opening element (20) comprises a heel pivoting about an axis (35) parallel to the axis (34) of the cylinder.

5. Automatic unit according to Claims 1 to 4, characterised in that the conduit (22) for discharging the coffee is provided in the closure/opening element (20).

6. Automatic unit according to Claims 1 to 5, characterised in that the conduit (23) for conveying hot water opens out in the upper face (31) of the pressure chamber.

7. Automatic unit according to Claims 1 to 6, characterised in that, in the piston (30) and its widened base (32), is provided a blind hole (36) intended to allow passage for the screw (40) when the piston (30) is in a position of maximum withdrawal.

8. Automatic unit according to Claims 4 to 7, characterised in that the means for driving the closure/opening element (20) and the screw (40) comprise motors grouped side by side.

## Patentansprüche

1. Espressoautomat, der folgendes umfaßt:
- eine Druckkammer (10) zur Kaffeezubereitung, die aus einer Zylinder-und-Kolben-Anordnung besteht und auf der einen Seite durch ein Schließ- und Öffnungselement (20), das dem Ein- und Ausbringen von Kaffeepulver dient, und auf der anderen Seite durch die Stellung der Oberseite (31) des Kolbens (30) begrenzt wird, wobei der in dieser Kammer (10) herrschende Druck durch Zwischenschaltung von elastischen, parallel zur Achse (34) des Zylinders wirkenden Verbindungsvorrichtungen (50) begrenzt wird,
- eine Leitung (23) zur Zufuhr von heißem Wasser oder Wasserdampf und eine Ausgangsleitung (22) für den Kaffee, sowie
- Steuermittel, die eine Stellung der Oberseite (31) des Kolbens und eine Wasser- und Kaffeemenge bestimmen,
dadurch gekennzeichnet, daß
- der das Volumen der Kammer (10) definierende Hub des Kolbens (30) durch eine Anordnung aus drehbeweglicher Schraube (40) und drehfester Mutter (41) bestimmt wird,
- der Kolben (30) eine verbreiterte Basis (32) umfaßt, die an mindestens einer parallel zur Achse (34) des Zylinders angeordneten Führungssäule (43) gleitet,
- die verbreiterte Basis (32) über die elastischen Verbindungsvorrichtungen (50) mit einem Schubstück (42) verbunden ist, das an der- oder denselben Führungssäule(n) (43) wie die verbreiterte Basis (32) gleitet,
- Anschlagmittel (51, 52) den Abstand zwischen dem Schubstück (42) und der verbreiterten Basis (32) begrenzen, und
- die Stellung jenes Schubstückes (42) durch die Anordnung aus drehbeweglicher Schraube (40) und drehfester Mutter (41) bestimmt wird, wobei die Mutter (41) einstückig mit dem Schubstück (42) ausgelegt ist und die Schraube (40) parallel zur Achse (34) des Zylinders liegt.

2. Automat nach Anspruch 1, dadurch gekennzeichnet, daß es sich bei den elastischen Verbindungsvorrichtungen (50) um Federn handelt.

3. Automat nach Anspruch 2, dadurch gekennzeichnet, daß es sich bei der verbreiterten Basis (32) und dem Schubstück (42) um rechteckige Flächen gleicher Abmessung handelt, die mindestens drei Sacklöcher (53) für die Aufnahme der Federn aufweisen.

4. Automat nach Ansprüchen 1 bis 3, dadurch gekennzeichnet, daß das Schließ- und Öffnungselement (20) einen Ansatz umfaßt, der sich um eine zur Achse (34) des Zylinders parallele Achse (35) dreht.

5. Automat nach Ansprüchen 1 bis 4, dadurch gekennzeichnet, daß die Ausgangsleitung (22) für den Kaffee im Schließ- und Öffnungselement (20) angeordnet ist.

6. Automat nach Ansprüchen 1 bis 5, dadurch gekennzeichnet, daß die Leitung (23) zur Zufuhr von heißem Wasser in der Oberseite (31) der Druckkammer mündet.

7. Automat nach Ansprüchen 1 bis 6, dadurch gekennzeichnet, daß im Kolben (30) und seiner verbreiterten Basis (32) ein Sackloch (36) angeordnet ist, in das die Schraube (40) hineingehen soll, wenn sich der Kolben (30) in seiner am weitesten zurückgefahrenen Stellung befindet.

8. Automat nach Ansprüchen 4 bis 7, dadurch gekennzeichnet, daß die Antriebsvorrichtungen des Schließ- und Öffnungselementes (20) und der Schraube (40) nebeneinander gruppierte Motoren umfassen.
